# EUROPEAN PATENT APPLICATION

(11) **EP 1 857 927 A2**
(43) Date of publication of application: **21.11.2007**
(21) Application number: 07252015.8
(22) Date of filing: 16.05.2007
(51) Int. Cl.: G06F 9/38, G06F 9/46

(54) **Method and system for enhanced thread synchronization and coordination**

(30) Priority: 17.05.2006 US 436292
(71) Applicant: Intel Corporation, Santa Clara, CA 95052 (US)
(72) Inventor: Doshi, Kshitij, Chandler, AZ 85225 (US); Weinberger Bracy, Anne, Philadelphia, PA 19146 (US); Jacobson, Quinn, Sunnyvale, CA 94087 (US); Wang, Hong, Santa Clara, CA 95052 (US)
(74) Representative: Beresford, Keith Denis Lewis

(57) **Abstract**

Synchronization and communication between concurrent software threads is enhanced. An attempt may be made to acquire a lock associated with a resource. If the lock is not available and/or the attempt fails, a hardware monitor may be configured to detect release of the lock. An asynchronous procedure call responsive to detection of the lock release facilitates another attempt to acquire the lock. Alternatively, upon acquiring the lock a hardware monitor may be configured to detect any attempt to acquire the lock. Access to the protected resource may be maintained until an asynchronous procedure call responsive to the detection of such an attempt. Then state may be restored to a safe point for releasing the lock. Alternatively, processing of reader lock requests may be adapted to a turnstile processing when no writer holds or waits for the lock and then adapted to read-write lock processing whenever a writer requests the lock.

## Description

### CROSS REFERENCE TO RELATED APPLICATION

This application is related to U.S. Patent Application Ser. No. 11/395,884, titled "Programmable Event-Driven Yield Mechanism," filed March 31, 2006, currently pending.

### FIELD OF THE DISCLOSURE

This disclosure relates generally to the field of microprocessors and microprocessor systems. In particular, the disclosure relates to improved synchronization and communication techniques between concurrent software threads and systems that support the use of such techniques.

### BACKGROUND OF THE DISCLOSURE

Modem computing systems and processors frequently support multiprocessing, for example, in the form of multiple processors, or multiple cores within a processor, or multiple software processes or threads (historically related to co-routines) running on a processor core, or in various combinations of the above. When multiple software processes or threads cooperate to perform a task, produce data for, share data with, or consume data from another software process or thread, synchronization or communication primitives are typically employed.

Shared memory is often used to facilitate synchronization or communication primitives. Barriers, locks, events, semaphores, monitors and channels are a few examples of such synchronization or communication primitives. Barriers allow for a process to arrive at a program point and to wait there until other processes arrive. Locks prevent simultaneous access to shared data. Events communicate the state of a program's execution to other processes. Semaphores coordinate or restrict access to shared resources. Monitors also provide mutually exclusive access to shared recources. Channels provide for point-to-point messaging between processes. These or other primitives may be used inside a thread to coordinate execution with concurrent cooperating threads.

Support for synchronization and/or communication primitives varies across operating systems, runtime environments, programming environments and architectures. Some operating systems provide kernel capabilities or macros through libraries for a subset of synchronization primitives. Some platform or processor architectures may provide atomic memory operations like test-and-set or load-and-clear instructions or they may provide other synchronization operations like pause or monitor and wait instructions to temporarily suspend a thread's execution.

Although necessary for error free execution, thread synchronization typically adds overhead to the execution time of a thread, potentially stalling execution of useful instructions for significant periods of idle time in comparison with the time spent in execution of the useful instructions. If not carefully and skillfully employed by programmers, such synchronization overhead may significantly degrade the performance of multithreaded applications. Thus some prior art attempts at optimizing multithreaded applications have emphasized the use of inter-thread synchronization sparingly to avoid performance degradation. Techniques for an actual reduction in idle time as compared with the time spent in execution of useful instructions have not been fully explored.

### BRIEF DESCRIPTION OF THE DRAWINGS

The present invention is illustrated by way of example and not limitation in the figures of the accompanying drawings.

**Figure 1** illustrates one embodiment of a cache memory architecture for enhanced synchronization and communication between threads.

**Figure 2** illustrates one embodiment of instructions of a memory aware technology.

**Figure 3** illustrates a multithreaded computing system with enhanced synchronization and communication between threads.

**Figure 4** illustrates an example state diagram for an attribute bit in a cache line of a multithreaded computing system.

**Figure 5** illustrates a flow diagram for one embodiment of a virtual polling process to monitor release of a synchronization lock.

**Figure 6** illustrates a flow diagram for one embodiment of a doorbell communication process to ensure reliable mutex recovery.

**Figure 7a** illustrates a flow diagram for one embodiment of reader-writer lock process using futex-acquire and futex-release.

**Figure 7b** illustrates a state diagram for one embodiment of an adaptive reader-writer synchronization system.

**Figure 7c** illustrates a flow diagram for one embodiment of an adaptive reader-writer lock process.

**Figure 8** illustrates a flow diagram for one embodiment of a greedy lock synchronization process.

### DETAILED DESCRIPTION

Methods and systems for enhanced synchronization and communication between concurrent software threads are disclosed herein. Threads in the following discussion may refer to processes of a multiprocessor workload wherein such processes may access and/or share memory. For one embodiment of an enhanced synchronization technique, an attempt may be made to acquire a lock associated with a resource. If the lock is not available and/or the attempt fails, a hardware monitor may be configured to detect release of the lock. An asynchronous procedure call responsive to detection of the lock release may be used to facilitate another attempt to acquire the lock.

For an alternative embodiment of a greedy locking synchronization technique when contests on a lock are rare, upon acquiring the lock a hardware monitor may be configured to detect any new attempt to acquire the lock. Access to the exclusive resource may then be maintained until the occurrence of an asynchronous procedure call responsive to the detection of such an attempt. Then the asynchronous procedure may be used to restore any protected state to a safe point for releasing the lock.

For an alternative embodiment of an adaptive form of Fast User Read-Write locks (Furwocks), processing of reader lock requests may be adapted to a turnstile processing when no writer holds a lock or waits for the lock. Then whenever a writer requests the lock any reader unlock requests may be processed until no reader holds the lock and processing may be adapted to read-write lock processing.

Numerous specific details such as synchronization or communication primitives, architectural scenarios, atomic memory operations, microarchitectural techniques, events, mechanisms, and the like are set forth in order to provide a more thorough understanding of the present invention.

These and other embodiments of the present invention may be realized in accordance with the following teachings and it should be evident that various modifications and changes may be made in the following teachings without departing from the broader spirit and scope of the invention. The specification and drawings are, accordingly, to be regarded in an illustrative rather than restrictive sense and the invention measured only in terms of the claims and their equivalents. Additionally, some well known structures, circuits, and the like have not been shown in detail to avoid unnecessarily obscuring the present invention.

For the purpose of the following discussion a computing system may refer to a single processor capable of executing co-routines or software threads that may communicate and/or synchronize their execution. A computing system may also refer to multiple processors capable of executing such software threads or to processor(s) capable of executing multiple such software threads simultaneously and/or concurrently. Such processor(s) may be of any number of architectural families and may further comprise multiple logical cores each capable of executing one or more of such software threads.

In one embodiment of the invention, memory attributes associated with a particular segment, portion, line, or block of memory may be used to indicate various properties of the memory block. For example, in one embodiment, there are associated with each block of memory attribute bits that may be defined by a user to indicate any number of properties of the memory block with which they are associated, such as access rights. In one embodiment, each block of memory may correspond to a particular line of cache, such as a line of cache within a level one (L1) or level two (L2) cache memory, and the attributes are represented with bit storage locations located with or otherwise associated with a line of cache memory. In other embodiments, a block of memory for which attributes may be associated may include more than one cache memory line or may be associated with another type of memory, such as DRAM.

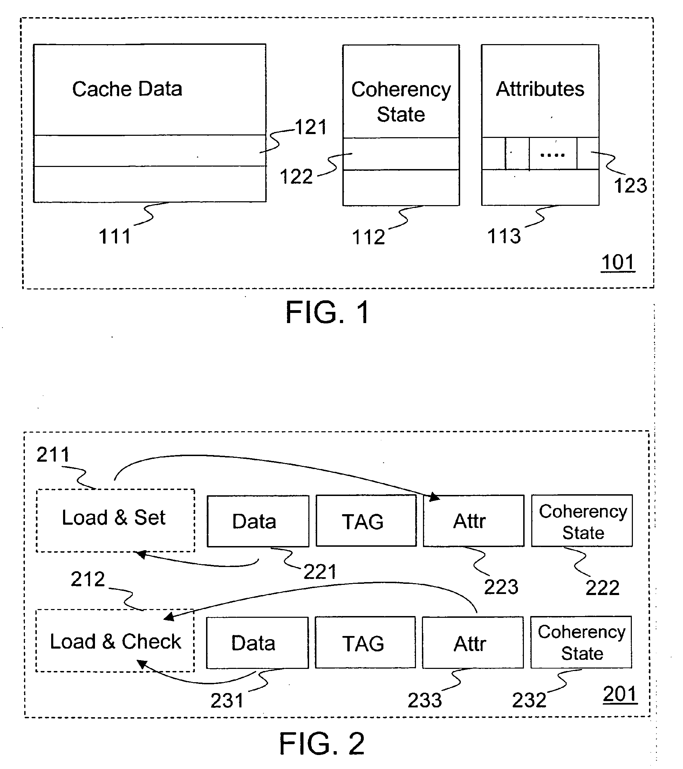

**Figure 1** illustrates one embodiment, for example, of a cache memory architecture 101 comprising cache data 111 stored in more than one cache memory line 121, coherency state 112 including coherency state 122 associated with cache memory line 121, and attributes 113 including attributes 123 associated with cache memory line 121.

It will be appreciated that in a processor that maintains cache coherency for cache memory line 121, usage of cache memory line 121 by other processors may be monitored by a hardware mechanism. For one embodiment of coherency state 112, the possible states include at least a *modified* state (an exclusive copy of the line which may be overwritten), a *shared* state (a nonexclusive read-only copy of the line) and an *invalid* state (no valid copy of the line). Events such as writing to a memory location associated with cache memory line 121 or requesting ownership of cache memory line 121 by other processors may cause a change of coherency state 122, and/or eviction of cache memory line 121.

For one embodiment, the group of attribute bits contains four bits, which may represent one or more properties of the cache line, depending upon how the attribute bits are assigned. For example, one embodiment assigns the attribute bits to indicate that the program has recently checked to see that the block of memory is appropriate for a current portion of the program to access. In an alternative embodiment, the attribute bits may indicate that a program has recorded a recent reference to the block of memory for later analysis by a performance monitoring tool, for example. In other alternative embodiments, the attribute bits may designate other permissions, properties, etc.

Attributes associated with a block of memory may be accessed, modified, and otherwise controlled by specific operations, such as an instruction or micro-operations decoded from an instruction. For example, one embodiment of such an instruction may load information from a cache line and set corresponding attribute bits. An alternative embodiment of such an instruction may load information from a cache line and check its corresponding attribute bits.

**Figure 2** illustrates one embodiment of instructions of a memory aware technology 201 including a load-and-set instruction 211 and a load-and-check instruction 212, which may be used to set or to check attribute bits associated with a particular cache line or range of addresses within a cache line. For alternative embodiments, other instructions or micro-operations (uops) may be used to perform the operations illustrated in Figure 2.

For one embodiment when a load-and-set instruction 211 is performed, for example, attribute bits 223 associated with the cache line 222 addressed by the load portion of the instruction are modified (e.g. Setting the 2^{nd} attribute bit to 1.). For one embodiment, the load-and-set instruction 211 may include a load uop and a set uop, which are decoded from load-and-set instruction 211. Other micro-operations may be included with the load and set operations in alternative embodiments. For one alternative embodiment after setting one of the attribute bits 223 with a load-and-set instruction 211, a thread may request an asynchronous call to a user specified procedure be performed if the coherency state 222 of the associated cache line 221 is invalidated. Such an architectural scenario may be referred to as a memory-line-invalidation (MLI) scenario.

For one embodiment of memory aware technology 201, when a load-and-check instruction 212 is performed, for example, attribute bits 233 associated with the cache line 231 addressed by the load portion of the instruction may be checked to determine if a specified attribute bit for cache line 231 is set to a particular value (e.g. Is the 1^{st} attribute bit set to 0?). For one embodiment of the load-and-check instruction 212, a light-weight thread yield to a user specified procedure may be performed if the specified bit of attribute bits 233 is not set to the particular value. Such an architectural scenario may be referred to as an unexpected-memory-state (UMS) scenario.

For alternative embodiments of memory aware technology 201, a light-weight yield to a user specified procedure may also be enabled when a load-and-set instruction 211 is performed or when a load-and-check instruction 212 is performed and when the cache line 221 or 231 respectively is not present or has an unexpected coherency state 222 or 232 respectively (for example, an invalid state) indicating that the cache line 221 or 231 respectively may not be associated with that particular software thread or process. Such an architectural scenario may be referred to as a line-load-coherency (LLC) scenario.

For one alternative embodiment of memory aware technology 201, a clear-MAT instruction may be included to clear all attribute bits of a specified position to a zero value. Alternative embodiments may use any variations of such instructions (e.g., a check-and-store instruction, a store-and-set instruction, a load-check-and-set instruction, etc.) instead of, in addition to, or in combination with load-and-set instruction 211 or load-and-check instruction 212. Alternative embodiments may employ instructions to control or access attribute bits, such instructions not having an associated load or store memory operations. Other alternative embodiments may also employ instructions to control or access attribute bits, such instructions having alternative types of associated cache memory operations such as barrier operations or prefetch operations and may define other scenarios based on checks of cache line memory attributes and/or coherency. Other alternative embodiments, may also check memory attributes for locations of finer granularity than or at specified locations within cache line 221 or 231.

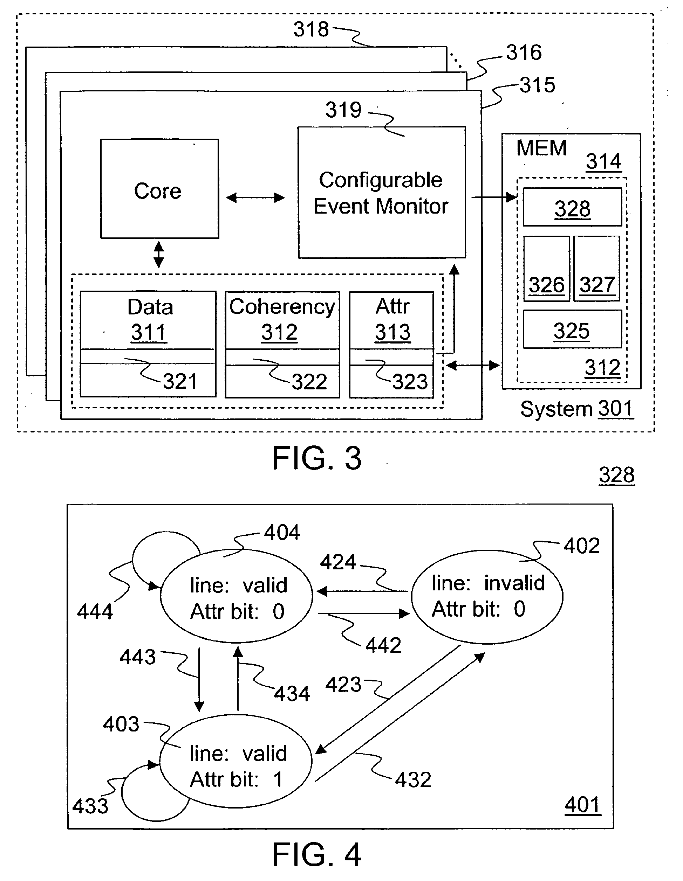

**Figure 3** illustrates one embodiment of a multithreaded computing system 301 with enhanced synchronization and communication between concurrent software threads 326 and 327. Multithreaded computing system 301 comprises a coherent addressable memory 314 and processors 315-318. It will be appreciated that each of processors 315-318 may logically represent a single processor capable of executing software threads that may communicate and/or synchronize their execution. Processors 315-318 may also represent multiple processor cores in a processor capable of executing such software threads, or processors 315-318 may represent a processor (or processors) capable of executing multiple such software threads simultaneously and/or concurrently. Such processor(s) may be of any number of architectural families and may further comprise multiple logical processor 315-318 cores each capable of executing one or more of such software threads. Some embodiments of processors 315-318 may be a general purpose processor or processors such as a processor of the Pentium® Processor Family or the Itanium® Processor Family or other processor families from Intel Corporation or processors from other companies. Processors 315-318 may incorporate technology, for example such as memory aware technology 201, into reduced instruction set computing (RISC) processors, complex instruction set computing (CISC) processors, very long instruction word (VLIW) processors, or any hybrid or alternative processor types.

One embodiment of processor 315, for example, comprises a configurable event monitor 319 coupled with said coherent addressable memory 314 via cache data 311, coherency state 312 and attributes 313. For one embodiment of a configurable event monitor 319, a program 312 optionally stored in coherent addressable memory 314 may enable the configurable event monitor 319 to cause a user defined procedure call in response to a memory event, for example, a write attempt to a shared memory location or the eviction of a cache line.

It will be appreciated that in such embodiments, a program stored (or not stored) in coherent addressable memory 314 and executable by any of processors 315-318 may comprise synchronized portions 325 protected by associated lock variables 321 stored in local cache data 311 and/or in coherent addressable memory 314. A first execution thread 326 of the program 312 having a synchronization procedure 328 may enable the configurable event monitor 319 to detect that the lock variable was accessed by a second execution thread 327 and the first execution thread 326 may configure event monitor 319 to cause an asynchronous call to the synchronization procedure 328 in response to any such detections.

It will also be appreciated that as integration trends continue and processors become more complex, the need to monitor and react to internal performance critical events may further increase, thus making presently disclosed techniques more desirable. However, due to rapid technological advances in this area of technology, it is difficult to foresee all the applications of the presently disclosed technology, though they may be widespread for systems that execute multiple threaded program sequences. As discussed in greater detail below, such mechanisms may be exploited to improve and/or enhance efficiency of synchronization and communication between concurrent software threads running on multithreaded computing system 301.

**Figure 4** illustrates an example state diagram 401 for one embodiment of an attribute bit in a cache line of a multithreaded computing system 301 with memory aware technology 201. For each of states 402-404, a coherency component (valid or invalid) and an attribute component (0 or 1) is shown. If a cache line begins in state 402 (invalid, 0) then a load-and-set instruction 211 can load data from a memory address into the cache line and set the attribute bit to 1, changing the state of the cache line to 403 (valid, 1) via transition 423. Having set an attribute bit for the cache line, the configurable event monitor 319 may now be enabled to detect a particular scenario (e.g. an MLI scenario) and to cause an asynchronous call to a specified procedure in response to such detection. For one embodiment, an event-monitor instruction may be used to configure event monitor 319 to associate the set attribute bit with a specified scenario type and upon detection of the specified scenario, event monitor 319 may suspend execution, push a next instruction pointer onto a return stack and set the next instruction pointer to the address of the specified procedure.

For example, when another thread writes to the cache line, invalidating the local copy and changing the state of the cache line to 402 (invalid, 0) via transition 432, event monitor 319 may detect an MLI scenario and asynchronously transfer control to the specified procedure. This procedure may perform any necessary synchronization, inspection of the new value held by the data at the monitored address, etc. A load-and-check instruction 212, for example, may reload the cache line, changing the state of the cache line to 404 (valid, 0) via transition 424, and another load-and-set instruction 211 may again set the attribute bit to 1, changing the state of the cache line to 403 (valid, 1) via transition 443. Upon completion of the specified procedure execution is again resumed at the next instruction pointer popped from the return stack. Thus, software may use such a mechanism to monitor changes that another thread might make to a particular address and to efficiently synchronize and/or communicate with other threads through shared memory locations.

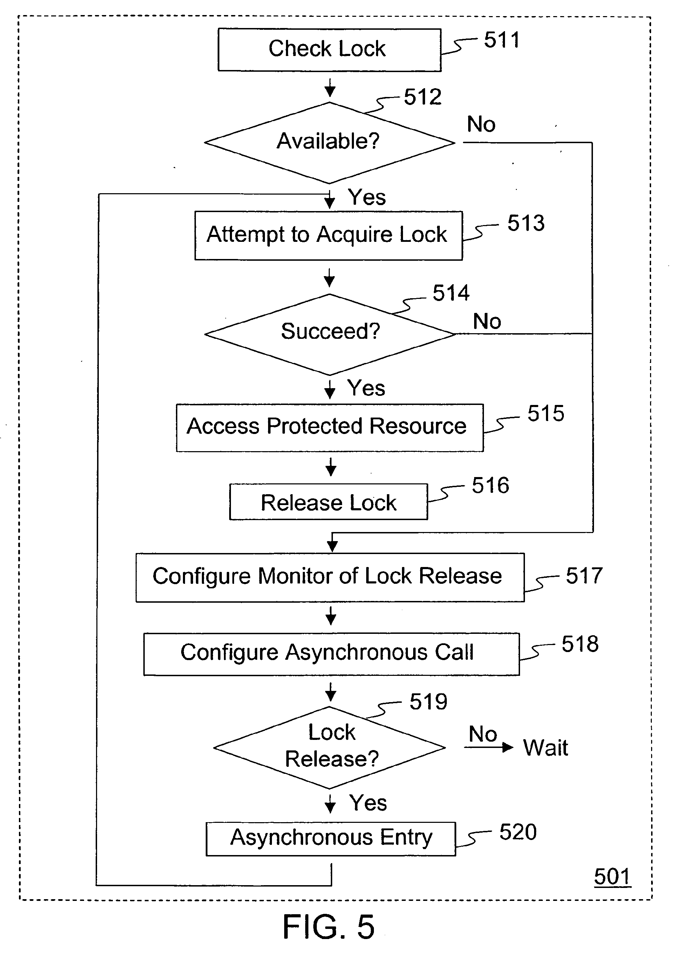

**Figure 5** illustrates a flow diagram for one embodiment of a virtual polling process 501 to monitor release of a synchronization lock. Process 501 and other processes herein disclosed are performed by processing blocks that may comprise dedicated hardware or software or firmware operation codes executable by general purpose machines or by special purpose machines or by a combination of both.

In processing block 511 a synchronization lock associated with a protected resource is checked. In processing block 512 it is determined if the lock is available. If the lock is determined to be available, an attempt is made to acquire the lock in processing block 513. In processing block 514 it is determined if the attempt to acquire the lock is successful. If the lock is determined in processing block 512 not to be available, or if the attempt to acquire the lock is determined in processing block 514 to have failed, then processing proceeds in processing block 517 where a hardware event monitor is configured to detect a release of the lock, for example by setting an attribute bit associated with the memory address of the lock and specifying a scenario type for the hardware event monitor 319 to associate with the set attribute bit. Processing continues in processing block 518 where an asynchronous call to a procedure is configured, for example by specifying the address of the procedure to be called when the hardware event monitor 319 detects an event of the specified scenario type associated with the monitored memory address (in this case, being indicative of the lock's release).

In processing block 519, the release of the lock is determined. While the lock is not released, the process 501 waits for the hardware event monitor 319 to detect the desired event. It will be appreciated that virtual polling process 501 need not be idle while waiting for the lock's release nor need virtual polling process 501 repeatedly poll the availability of lock. Since the hardware event monitor is configured to detect a release of the lock and cause an asynchronous call to a procedure for completing the synchronization, the virtual polling process 501 may opportunistically perform other useful work while waiting for the lock's release. When the release of the lock is determined to have occurred in processing block 519, processing continues in processing block 520 with asynchronous entry to the specified procedure. In processing block 513 an attempt is made to acquire the lock and in processing block 514 it is determined if the attempt to acquire the lock is successful. If in processing block 514 it is determined that the attempt to acquire the lock has succeeded, the processing continues in processing block 515 with access to the protected resource. Upon completion of processing in processing block 515, processing is culminated in processing block 516 by releasing the lock.

It will be appreciated that a technique such as the one used by virtual polling process 501 may avoid a common "missed wakeup" race that can otherwise occur when a thread must block. More generally, races that occur rarely (such as the modification of "read mostly" state) may be detected and the locks meant to detect such race conditions may be obviated through the use of the techniques herein disclosed.

One such race condition presently exists, for example, in Linux futexes (fast user mutexes). Since uncontested futexes are acquired and released without kernel intervention, the kernel does not have enough information to trace a futex to its current holder if that current holder terminates without releasing the futex. The race condition may be resolved by a two-phase commit but the performance overhead for such an approach is high, particularly for frequent and rarely contested acquires and releases. However reliable mutex (or futex) recovery may be accomplished with relatively little performance overhead through the use or memory aware technology 201 instructions and configurable event monitor 319.

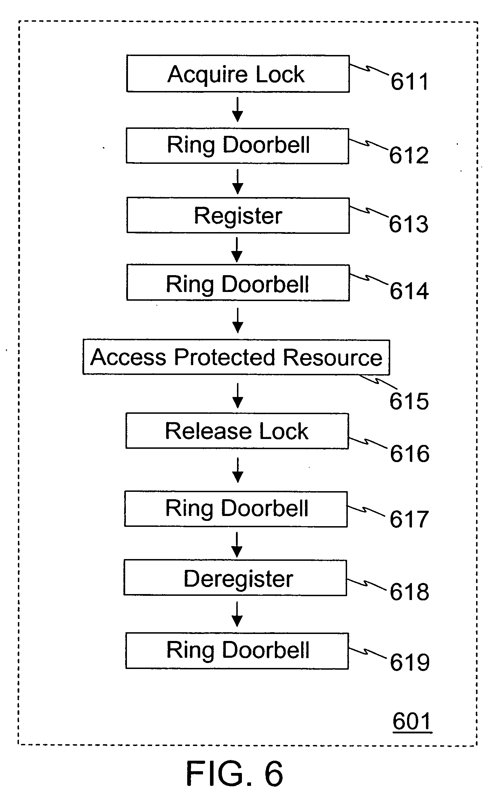

For example, **Figure 6** illustrates a flow diagram for one embodiment of a doorbell communication process 601 to ensure reliable mutex (or futex) recovery. In processing block 611, a lock is acquired, for example by performing a futex-acquire operation. Then in processing block 612 the acquirer in the critical section rings a doorbell variable, which is a shared memory location that is being monitored by the kernel or runtime and is rung by simply writing to a corresponding memory location. Ringing the doorbell in processing block 612 alerts the kernel or runtime that the acquirer is in the critical section. Processing continues in processing block 613 where the acquirer registers acquisition of the lock in a global structure. Following processing block 613, processing proceeds to processing block 614 where the acquirer again rings the doorbell to alert the kernel or runtime that the acquirer has completed the critical section and registered acquisition of the lock.

Processing continues in processing block 615 with access to the protected resource. Upon completion of processing in processing block 615, processing proceeds to processing block 616 where the acquirer releases the lock, for example by performing a futex-release operation. In processing block 617 where the acquirer rings the doorbell to alert the kernel or runtime that the acquirer is in the critical section of deregistering acquisition. Processing continues in processing block 618 where the acquirer deregisters acquisition of the lock in the global structure. Following processing block 618, processing proceeds to processing block 619 where the acquirer again rings the doorbell to alert the kernel or runtime that the acquirer has completed the critical section and deregistered acquisition of the lock.

It will be appreciated that process 602 may ensure reliable mutex (or futex) recovery if during thread exits the kernel checks whether a thread was in such a critical section before exit processing was performed on it.

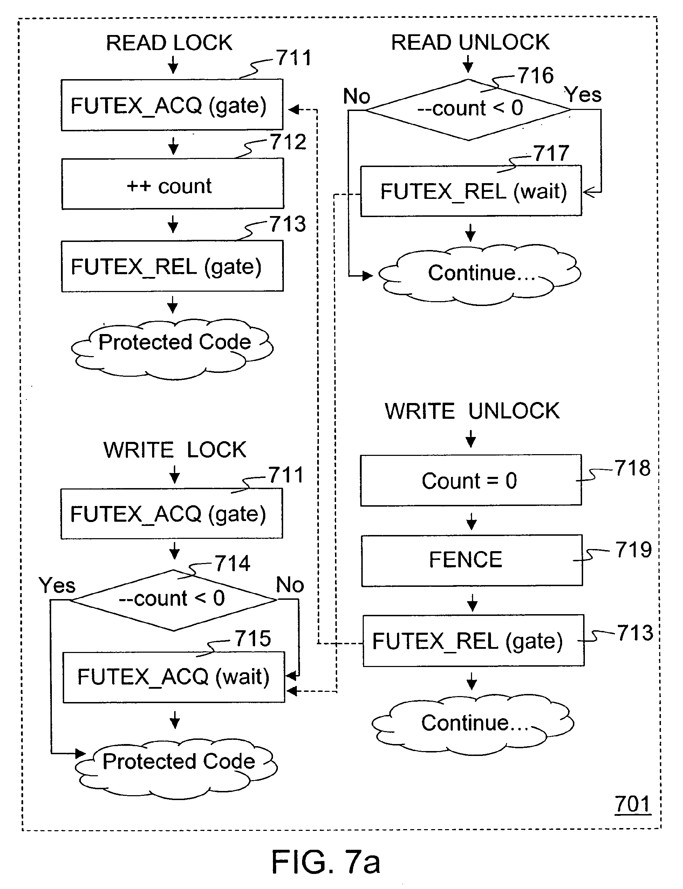

**Figure 7a** illustrates a flow diagram for one embodiment of reader-writer lock process 701 using futex-acquire and futex-release that can be efficiently implemented through memory aware technology 201 instructions and event monitor 319. In the case of a thread executing a read lock, processing begins in processing block 711 where the lock variable gate may be acquired by checking if the value of gate is equal to zero and if so setting the value of gate to one. If the lock variable gate is not zero, then an attribute bit for the lock variable, gate, may be set and the configurable event monitor 319 enabled to detect when the lock variable is accessed and released by another thread (e.g. processing block 713 of a thread execution a write unlock), at which point event monitor 319 may cause an asynchronous call to a synchronization procedure to complete the acquisition of the lock variable gate. When the lock variable gate has been acquired, the count variable is incremented in processing block 712. Processing then proceeds to processing block 713 where the lock variable gate is released by writing a value of zero to the lock variable and then the reader thread may access the protected resource.

It will be appreciated that whenever a lock variable is not available because it is being modified by another thread or not present in the local cache resulting in a cache miss, the configurable event monitor 319 may also be enabled to detect an unexpected coherency state for the memory address of the lock variable, and a specified procedure may be activated by the event monitor in response to the unexpected coherency state to perform useful work in the shadow of resolving the cache miss.

Turning now to the case of a thread executing a write lock, processing again begins in processing block 711 where the lock variable gate may be acquired, for example by checking if the value of gate is equal to zero and if so setting the value of gate to one. Otherwise an attribute bit for the lock variable, gate, may be set and the configurable event monitor 319 enabled to detect when the lock variable is released by another thread, at which point event monitor 319 may cause an asynchronous call to a synchronization procedure to complete the acquisition of the lock variable gate. When the lock variable gate has been acquired, the count variable is decremented in processing block 714. If the decremented count variable is less than zero (more specifically, minus one) then no readers are present and the writer thread may access the protected resource. Otherwise a value for the decremented count variable of zero or more indicates the presence of one or more readers with access to the protected resource and processing proceeds to processing block 715. In processing block 715 the lock variable wait may be acquired, for example by setting the value of wait to one. Then an attribute bit for the lock variable, wait, may be set and the configurable event monitor 319 enabled to detect when the lock variable is released by another thread (e.g. processing block 717 of a thread execution a read unlock), at which point event monitor 319 may cause an asynchronous call to a specified synchronization procedure to check that the lock variable, wait, has been released and permit the writer thread access to the protected resource.

As noted above, a value for the count variable greater than zero indicates the presence of one or more readers with access to the protected resource and any waiting writer must wait. We now turn to the case of a thread executing a read unlock. Processing begins in processing block 716 where the count variable is decremented. If the decremented count variable is zero or more nothing needs to be done and processing simply continues. If the decremented count variable is less than zero (more specifically, minus one) then no more readers are present and one writer thread is waiting for access to the protected resource. Processing then proceeds to processing block 717 where the lock variable wait is released by writing a value of zero to the lock variable and the waiting writer thread may then access the protected resource.

Now turning to the case of a thread executing a write unlock, processing begins in processing block 718 where the count variable (being equal to minus one whenever a writer has access to the protected resource) is incremented or set to zero. In a weakly ordered memory system a memory fence may optionally be employed in processing block 719 to guarantee the synchronization of the count variable before releasing the lock variable gate. Processing then proceeds in processing block 713 where the lock variable gate is released, for example by writing a value of zero to the lock variable.

Thus a reader-writer lock process 701 using futex-acquire and futex-release may be efficiently implemented through memory aware technology 201 instructions and event monitor 319. In a system where writer acquires are rarer than reader acquires, further efficiencies may be achieved through memory aware technology 201 instructions and event monitor 319 by permitting adaptive synchronization behavior.

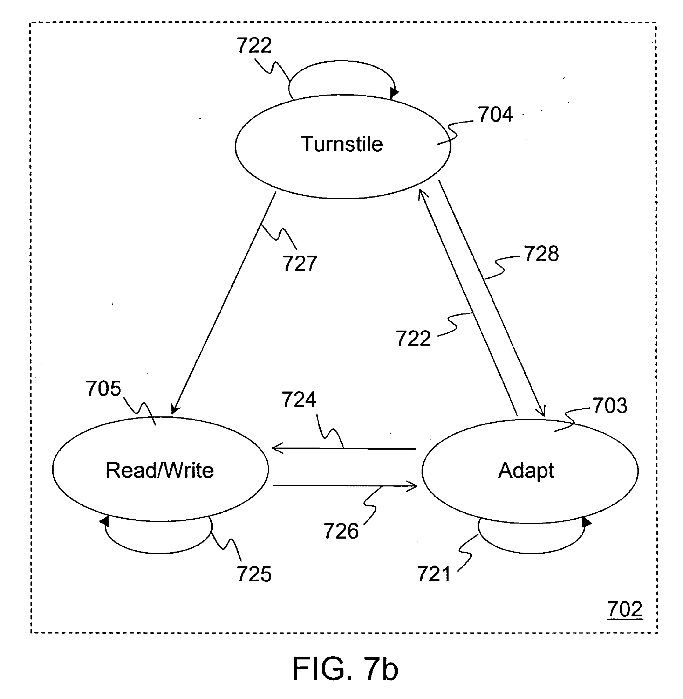

**Figure 7b** illustrates a state diagram 702 for one embodiment of an adaptive reader-writer synchronization system. In the state diagram 702, read/write processing in state 705 proceeds substantially similar to that of reader-writer lock process 701 described above, but when threads rarely execute a write lock (i.e. whenever no writer holds the lock variable gate and no writer waits for the lock variable), processing may be permitted to change via transition 726, to adaptive processing in state 703 where any reader unlock requests are processed until no reader holds a read lock (i.e. no reader holds the lock variable gate), processing may then be permitted to change via transition 723, to turnstile processing in state 704 of reader lock requests and reader unlock requests. In turnstile processing state 704 readers are not required to contest for the lock variable gate and simply increment the count variable upon lock requests until a writer acquires the lock variable gate.

If, at the time the lock variable gate is acquired by a writer attempting to perform a write lock, there are no readers accessing the protected resource, then processing may be permitted to change via transition 727, to read/write processing in state 705 of write lock request. If, on the other hand there are readers accessing the protected resource, then processing may be permitted to change via transition 728, to adaptive processing in state 703 where any reader unlock requests are processed until no readers are accessing the protected resource, processing may then be permitted to change via transition 724 to read/write processing in state 705 of the write lock request.

It will be appreciated that the adaptive behavior of state diagram 702 may be accomplished in a number of ways through memory aware technology 201 instructions and event monitor 319. For example, control threads may be assigned the task of monitoring count and gate variables and signaling to readers to adapt read lock and read unlock processing. Alternatively, reader and writer threads may use memory aware technology 201 instructions and event monitor 319 to collectively adapt in a decentralized manner. One embodiment permits such adaptation through the use two additional shared communication variables, one to indicate that writers are present and another to indicate that readers are present.

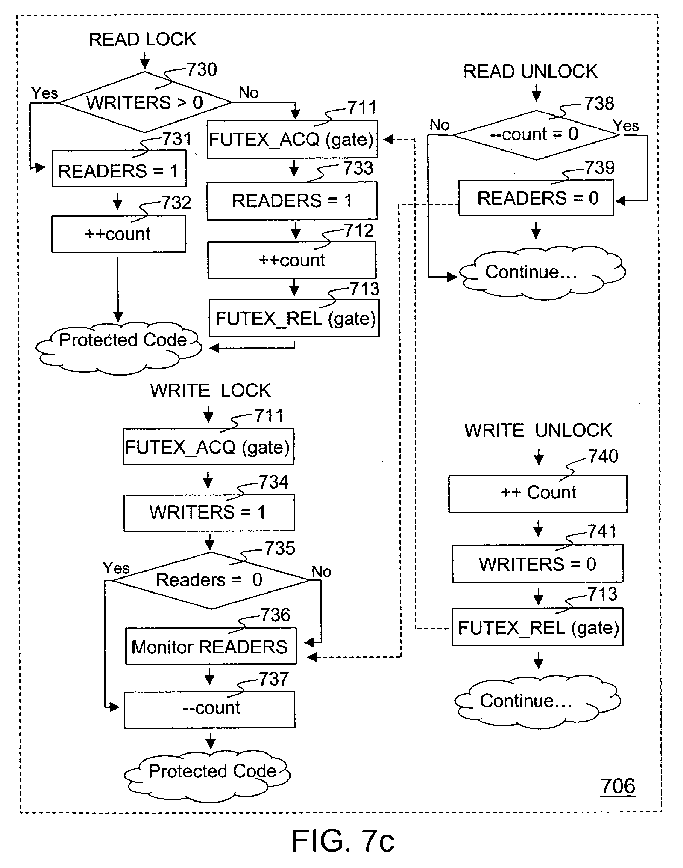

For example, **Figure 7c** illustrates a flow diagram for one embodiment of an adaptive reader-writer lock process 706 that can be efficiently implemented through memory aware technology 201 instructions and event monitor 319.

In the case of a thread executing a read lock, processing begins in processing block 730 where a variable, writers, is checked to determine if it is zero (indicating that no writers are present). If so turnstile processing of reader lock requests may be used (as in state 704) and processing proceeds to processing block 731 where a variable, readers, is set to one to indicate the presence of a reader. Processing then proceeds to processing block 732 where the count variable is incremented and then the reader thread may access the protected resource.

Otherwise in processing block 730 if the variable, writers, is not zero (indicating that a writer is present) processing proceeds as in Figure 7a to processing block 711 where the lock variable gate may be acquired by checking if gate is equal to zero and if so setting the value of gate to one. If the lock variable gate is not zero, then an attribute bit for the lock variable, gate, may be set and the configurable event monitor 319 enabled to detect when the lock variable is accessed by another thread and released, at which point event monitor 319 may cause an asynchronous call to a synchronization procedure to complete the acquisition of the lock variable gate. When the lock variable gate has been acquired, processing proceeds to processing block 733 where the variable, readers, is set to one to indicate the presence of a reader. The count variable is then incremented in processing block 712, and processing proceeds to processing block 713 where the lock variable gate is released by writing a value of zero to the lock variable. Then the reader thread may access the protected resource.

It will be appreciated that in alternative read-lock embodiments of process 706, the count variable may be incremented and then the variable, readers, conditionally set to one if the incremented count variable is less than two (indicating that the current thread is the first reader). Thus the number of write operations to the shared variable, readers, may be significantly reduced.

Turning next to the case of a thread executing a write lock, processing begins substantially similar to that of Figure 7a in processing block 711 where the lock variable gate may be acquired by checking if gate is equal to zero and if so setting the value of gate to one. Otherwise an attribute bit for the lock variable, gate, may be set and the lock variable monitored to detect when the lock variable is released by another thread, at which point an asynchronous call may be made to a synchronization procedure to complete the acquisition of the lock variable gate. When the lock variable gate has been acquired, processing proceeds to processing block 734 where the variable, writers, is set to one to indicate the presence of a writer. In processing block 735 the variable, readers, is checked to determine if it is zero (indicating that no readers are present). If so the count variable is decremented in processing block 737 and the writer thread is permitted access to the protected resource.

If in processing block 735 the variable, readers, is not zero (indicating that readers are present with access to the protected resource), processing proceeds to processing block 736. In processing block 736 an attribute bit for the variable, readers, may be set and the configurable event monitor 319 enabled to detect when the variable readers is reset to zero by another thread (e.g. processing block 739 of a thread execution a read unlock), at which point event monitor 319 may cause an asynchronous call to a specified synchronization procedure to check that the variable, readers, has been reset to zero, and if so the count variable is decremented in processing block 737 and the writer thread is permitted access to the protected resource.

We now turn to the case of a thread executing a read unlock. Processing begins in processing block 738 where the count variable is decremented. If the decremented count variable is greater than zero nothing needs to be done and processing simply continues. If the decremented count variable is equal to zero then no more readers are present and a writer thread may be waiting in processing block 736 for access to the protected resource. In this case, processing proceeds to processing block 739 where the variable readers is reset by writing a value of zero to the variable.

Now turning to the case of a thread executing a write unlock, processing begins in processing block 740 where the count variable (being equal to minus one when a writer has access to the protected resource) is incremented or set to zero. In processing block 741, the variable, writers is reset to zero to indicate that no writer thread, having already acquired the lock variable gate, is waiting to access the protected resource. Processing then proceeds in processing block 713 where the lock variable gate is released by writing a value of zero to the lock variable.

Thus an adaptive reader-writer lock process 706 may be efficiently implemented through memory aware technology 201 instructions and event monitor 319. In a system where writer acquires are rarer than reader acquires, additional efficiencies may be achieved by permitting adaptive synchronization behavior to reduce the number of contests for the lock variable, gate, and permit easier access to reader threads when no writer threads are present.

One alternative embodiment of a multithreaded computing system may permit a greedy lock synchronization when contests for a lock are rare enough, which allows a thread to hold a lock for a longer duration provided that it is willing to release the lock and redo whatever it needed to accomplish when it later reacquires the lock.

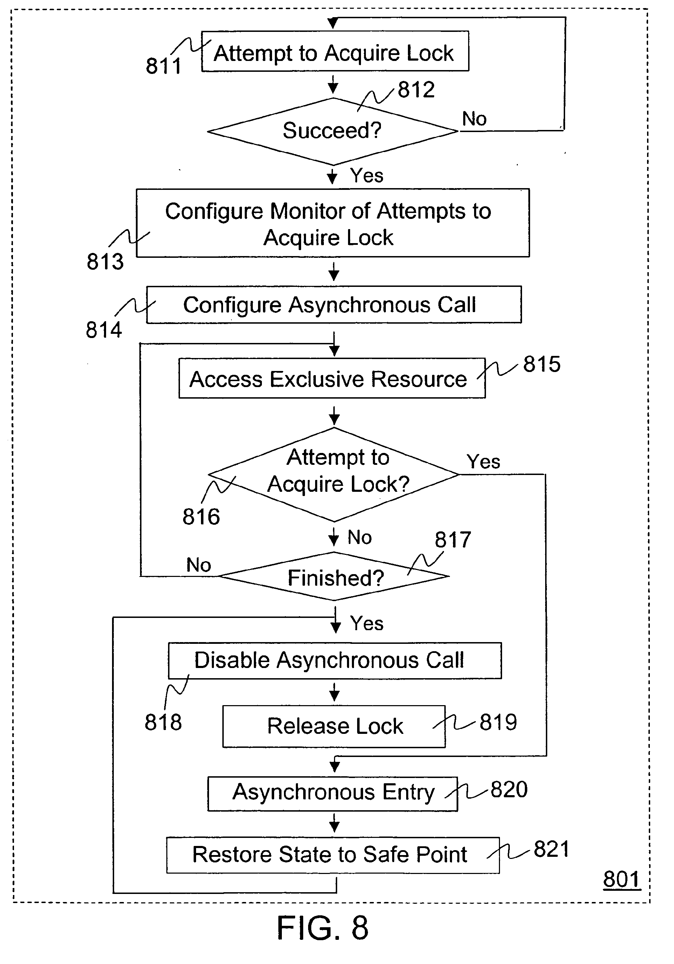

For example, **Figure 8** illustrates a flow diagram for one embodiment of a greedy lock synchronization process 801 that can be efficiently implemented through memory aware technology 201 instructions and event monitor 319. Processing begins in processing block 811 where an attempt is made to acquire a lock variable associated with a protected resource. In processing block 812 a determination is made whether or not the attempt has been successful. If the attempt has not been successful, an attribute bit for the lock variable may be set and the configurable event monitor 319 enabled to detect when the lock variable is released to zero by another thread, at which point event monitor 319 may cause an asynchronous call to a specified synchronization procedure to check that the lock variable has been released and reattempt to acquire the lock variable in processing block 811. Otherwise, if the attempt to acquire the lock succeeds, then processing proceeds to processing block 813 where an attribute bit for the lock variable may be set and the configurable event monitor 319 configured to detect an attempt by another thread to acquire the lock variable. In processing block 814 an asynchronous call by event monitor 319 to a procedure to handle the release of the lock variable is configured. Processing proceeds in processing block 815 by accessing the protected resource. In processing block 816 the event monitor 319 continues to monitor the lock variable to detect an attempt by another thread to acquire the lock variable. Processing then continues in processing block 817 if no attempt to acquire the lock variable is detected.

If in processing block 817, the task requiring access to the protected resource is finished then the asynchronous call by event monitor 319 to the specified procedure is disabled in processing block 818 and the lock variable is released in processing block 819. Otherwise access to the protected resource in processing block 815 continues until an attempt to acquire the lock variable is detected by event monitor 319 in processing block 816, in which case an asynchronous entry, in processing block 820, to the specified procedure is caused by event monitor 319 responsive to detecting an attempt to acquire the lock variable. In processing block 821 the specified procedure restores protected resource state to a safe point for releasing the lock and processing proceeds to processing block 818. In processing block 818 the asynchronous procedure call may be disabled and then the lock variable is released in processing block 819.

Thus the greedy lock synchronization process 801 may be efficiently implemented through memory aware technology 201 instructions and event monitor 319. It will be appreciated that various processing blocks in process 801 and in other processes herein disclosed may be executed in the order shown or in some other order in accordance with particular dynamic executions and/or design decisions.

The above description is intended to illustrate preferred embodiments of the present invention. From the discussion above it should also be apparent that especially in such an area of technology, where growth is fast and further advancements are not easily foreseen, the invention may be modified in arrangement and detail by those skilled in the art without departing from the principles of the present invention within the scope of the accompanying claims and their equivalents.

## Claims

1. A machine implemented method comprising:
checking to determine if a lock associated with a protected resource is available;
if the lock is determined to be available, attempting to acquire the lock;
if the lock is not available or the attempt to acquire the lock fails, then:
configuring a hardware monitor to detect a release of the lock,
configuring an asynchronous call to a procedure, and
asynchronously entering the procedure responsive to detection of the lock release.

2. An article of manufacture comprising
a machine-accessible medium including data that, when accessed by a machine, causes the machine to perform the method of Claim 1.

3. The method of Claim 1 further comprising:
attempting to acquire the lock; and
if the attempt to acquire the lock succeeds, accessing the protected resource then releasing the lock.

4. The method of Claim 1 wherein the hardware monitor is configured to detect the release of the lock at least in part by setting an attribute bit associated with the address of the lock.

5. The method of Claim 4 wherein the hardware monitor is configured to detect the release of the lock at least in part by setting a scenario type associated with the set attribute bit.

6. A machine implemented method comprising:
attempting to acquire a lock associated with a protected resource;
if the attempt to acquire the lock succeeds, then:
configuring a hardware monitor to detect an attempt to acquire the lock, configuring an asynchronous call to a procedure; and
accessing the protected resource,
asynchronously entering the procedure responsive to detection of the attempt to acquire the lock.

7. An article of manufacture comprising
a machine-accessible medium including data that, when accessed by a machine, causes the machine to perform the method of Claim 6.

8. The method of Claim 6 further comprising:
restoring state to a safe point for releasing the lock;
disabling the asynchronous procedure call; and
releasing the lock.

9. The method of Claim 6 wherein the hardware monitor is configured to detect the attempt to acquire the lock at least in part by setting an attribute bit associated with the address of the lock.

10. The method of Claim 9 wherein the hardware monitor is configured to detect the attempt to acquire the lock at least in part by setting a scenario type associated with the set attribute bit.

11. A machine implemented method comprising:
when no writer thread holds a write-lock and no writer thread waits for a read-lock release, then adapt to turnstile processing reader lock requests and reader unlock requests; and
when a writer thread holds the write-lock or a writer thread waits for the read-lock release, process any reader unlock requests until no reader thread holds the read-lock, then adapt to read-write processing writer lock and unlock request.

12. The apparatus of Claim 11 wherein the write-lock indicates that a writer thread is presently contesting for access to a protected resource.

13. The apparatus of Claim 12 wherein the write-lock is a mutually exclusive gate variable.

14. The apparatus of Claim 11 wherein the read-lock indicates that a reader thread has access to a protected resource.

15. The apparatus of Claim 12 wherein the read-lock is not a mutually exclusive variable.

16. An article of manufacture comprising
a machine-accessible medium including data that, when accessed by a machine, causes the machine to perform the method of Claim 11.

17. A multithreaded computing system comprising:
an coherent addressable memory;
a processor comprising a configurable event monitor coupled with said coherent addressable memory to cause a procedure call in response to a memory event;
a program stored in said coherent addressable memory and executable by said processor, said program comprising a synchronized portion protected by a memory variable, a first execution thread having a synchronization procedure and a second execution thread, said first execution thread to enable said configurable event monitor to detect that the memory variable was accessed by said second execution thread and to cause an asynchronous call to said synchronization procedure in response.

18. The computing system of Claim 17, wherein said memory variable is a lock variable to protect said synchronized portion.

19. The computing system of Claim 18, said first execution thread further to:
check to determine if said lock variable is available;
if the lock variable is determined to be available, attempt to acquire the lock variable;
if the lock variable is not available or the attempt to acquire the lock variable fails, then enable said event monitor by configuring it to detect a release of the lock variable and to cause an asynchronous call to said synchronization procedure in response.

20. The computing system of Claim 19, said first execution thread further to:
asynchronously enter the synchronization procedure responsive to detection of the lock variable's release then attempt to acquire the lock variable; and
if the attempt to acquire the lock variable succeeds, access said synchronized portion of the program.

21. The computing system of Claim 18, said first execution thread further to:
attempt to acquire the lock variable;
if the attempt to acquire the lock variable succeeds, then:
enable said event monitor by configuring it to detect an attempt to acquire the lock variable and to cause an asynchronous call to said synchronization procedure in response, and
access said synchronized portion of the program.

22. The computing system of Claim 21, said first execution thread further to:
asynchronously enter the procedure responsive to detection of the attempt to acquire the lock variable then:
restoring state of said synchronized portion of the program to a safe point for releasing the lock,
disabling the asynchronous procedure call in said event monitor; and
releasing the lock.

23. The computing system of Claim 17, said first execution thread further to:
check to determine if a write variable is set;
if the write variable is not set, set a read variable and increment a count variable;
otherwise if the write variable is set, then check to determine if the memory variable is set, and then if the memory variable is set, enable said event monitor to detect a changing of the memory variable and to cause an asynchronous call to said synchronization procedure in response.

24. The computing system of Claim 23, said first execution thread further to:
asynchronously enter the synchronization procedure responsive to detection of the changing of the memory variable then if the memory variable is not set:
set the memory variable,
set the read variable,
increment the count variable, and
reset the memory variable.

25. The computing system of Claim 23, said first execution thread further to:
decrement the count variable; and
if the decremented count variable has a value of zero, then reset the read variable.

26. The computing system of Claim 18, said first execution thread further to:
check to determine if the lock variable is set;
if the lock variable is not set, then:
set the lock variable,
set a write variable,
check to determine if a read variable is set, then
if the read variable is not set, decrement the count variable, or
otherwise if the read variable is set, enable said event monitor to detect a changing of the read variable and to cause an asynchronous call to a wait synchronization procedure in response; else
if the lock variable is set, then enable said event monitor to detect a changing of the lock variable and to cause an asynchronous call to said synchronization procedure in response.

27. The computing system of Claim 26, said first execution thread further to:
increment the count variable;
reset the write variable; and
reset the lock variable.

28. The computing system of Claim 17, said first execution thread further to:
enable said configurable event monitor to detect an unexpected coherency state for a memory address of the memory variable, the program further comprising a useful work module stored in the memory and activated by the configurable event monitor in response to the unexpected coherency state, said useful work module to perform useful work in the shadow of resolving said unexpected coherency state.
